# EUROPÄISCHE PATENTSCHRIFT

(11) **EP 2 991 456 B1**
(45) Veröffentlichungstag und Bekanntmachung des Hinweises auf die Patenterteilung: **06.01.2021**
(21) Anmeldenummer: 15182509.8
(22) Anmeldetag: 21.11.2012
(51) Int. Cl.: H05B 45/20, H05B 47/175, H05B 47/18, H05B 47/125, H05B 47/19

(54) **KONFIGURATION VON BETRIEBSGERÄTEN FÜR LEUCHTMITTEL**
CONFIGURATION OF OPERATING DEVICES FOR LUMINOUS ELEMENTS
CONFIGURATION D'APPAREILS DE FONCTIONNEMENT POUR MOYEN D'ECLAIRAGE

(30) Priorität: 21.11.2011 DE 102011086702
(43) Veröffentlichungstag der Anmeldung: 02.03.2016
(62) Teilanmeldung aus: 12816636.0
(73) Patentinhaber: Tridonic GmbH & Co KG, 6851 Dornbirn (AT)
(72) Erfinder: Bischof, Gerold, 6820 Frastanz (AT); Wood, Anthony John, Houghton Le Spring, Tyne and Wear (GB)
(74) Vertreter: Rupp, Christian

(56) Entgegenhaltungen:
- EP-A1- 1 821 582
- WO-A1-2009/044330
- US-A1- 2009 218 951

## Beschreibung

Die Erfindung betrifft eine Vorrichtung, ein System und ein Verfahren zum Konfigurieren einer Lichtquelle. Insbesondere betrifft die Erfindung eine Konfiguration eines Betriebsgerätes für ein Leuchtmittel, welches Betriebsgerät Teil einer Leuchte ist.

Aus der DE 10 2210 003 949 A1 ist ein System zum Abgleich einer LED-Lichtquelle auf wenigstens einen lichttechnischen Parameter mit einer weiteren Lichtquelle beschrieben. Das System weist dabei eine Abgleicheinheit mit einem Lichtsensor zur Erfassung des wenigstens einen lichttechnischen Parameters einer Lichtquelle, und eine Schnittstelle zur drahtlosen Übertragung oder drahtgebundenen Ausgabe von die Parameter wiedergebende Daten auf. Das System weist weiter eine LED-Lichtquelle mit einer Steuereinheit auf, die dazu ausgelegt ist, über eine Schnittstelle der LED-Lichtquelle von der Schnittstelle der Abgleicheinheit Daten zu erhalten und diese in einem, der Lichtquelle zugeordneten, Speicher abzulegen.

Aus der EP 2 169 965 A1 ist ein System bekannt, bei dem eine Farbtemperatur einer Operationsleuchte mit Hilfe einer Steuereinrichtung einstellbar ist. Eine Kamera ist mit einem Bildverarbeitungsgerät verbunden und die Steuereinrichtung kann einen Farbtemperaturparameter an der Operationsleuchte einstellen, wenn eine Abweichung in der Farbtemperatur festgestellt wird. Die Kamera ist dabei an der Operationsleuchte fest installiert.

Aus der WO WO 2010/100576 A1 ist ein System bekannt, das eine Bestellung von Gütern über ein Mobiltelefon erlaubt. In dem System ist eine Leuchte vorgesehen, die je nach Bestellung die Farbe ändert.

Aus der DE 10 2210 038 792 A1 ist ein Verfahren zur Zuweisung einer Betriebsadresse an ein busfähiges Betriebsgerät für Leuchtmittel bekannt, in dem eine absolute oder relative Position des Betriebsgeräts durch ein PositionsGerät ermittelt wird. Die Position wird in eine Betriebsadresse umgesetzt und in dem Betriebsgerät gespeichert.

Aus der DE 10 2205 029 728 A1 ist eine Anordnung zur Steuerung der Intensität einer Straßenbeleuchtung bekannt, die eine oder mehrere ortbare und einzeln identifizierbare Mobilgeräte umfasst. Straßenbeleuchtungselemente werden abhängig von der Lage und der Identität der Mobilgeräte über eine Steuerungseinrichtung angesteuert.

In GB 2418482 A ist ein Verfahren zum Ersetzen einer Netzwerkadresse eines Leuchtmittels beschrieben, das eine Steuereinheit zur Lichtsteuerung verwendet. Die Steuereinheit wechselt systematisch zwischen verschiedenen Lichtniveaus oder Farben, so dass das Leuchtmittel identifiziert werden kann.

Die US 2009/218951 A1 offenbart ein mobiles Kommunikationsendgerät nach dem Oberbegriff des unabhängigen Anspruchs 1. Bei marktüblichen Licht-/Beleuchtungssystemen die z.B. am Arbeitsplatz zum Einsatz kommen, wird eine Bestrahlungsstärke beispielsweise von einem Tisch, einem Transportweg oder anderen Objekten indirekt über einen z.B. an der Leuchte angebrachten Sensor bestimmt. Farbtemperaturwerte sowie eine Farbzusammenstellung werden nicht erfasst. Insbesondere erfolgt keine Analyse des von einer Lichtquelle abgegebenen Lichts, der Strahlungsstärke sowie einer Farbzusammenstellung hinsichtlich physiologischer Aspekte, d.h. hinsichtlich der Auswirkung des abgegebenen Lichts auf den Menschen.

Dies hat insbesondere den Nachteil, dass sich im Allgemeinen die Beleuchtungssituation, insbesondere die Farbtemperatur oder das Farbspektrum des Lichts nicht auf das individuelle Empfinden einer Person einstellen lässt.

Weiter haben verschiedene Oberflächen bei gleicher Bestrahlung unterschiedliche Reflektionseigenschaften, die beispielsweise abhängig von einer Tageszeit, einer Jahreszeit, eines Ortes und/oder einer Temperatur von einer Person verschieden, z.B. als angenehm oder unangenehm, wahrgenommen werden können.

Heutige Lichtmesssysteme arbeiten nach dem indirekten Prinzip, d.h. es wird eine Lichtregelung/-Steuerung durch das an einer Oberfläche reflektierte Licht herangezogen. Beispielsweise kann die Farbe einer Tischoberfläche einen starken Einfluss auf die Wahrnehmung einer Person haben, da das reflektierte Licht stark von den optischen Eigenschaften der Tischoberfläche abhängt. So kann bei gleicher Einstellung für die Leuchte, das Betriebsgerät und/oder das Leuchtmittel bei einer dunklen Tischoberfläche eine wesentlich geringere Reflektion festgestellt werden, die von einer Person als angenehm empfunden wird, während bei gleicher Einstellung und einer weißen Tischoberfläche eine unangenehme Reflektion mit hoher Strahlstärke wahrgenommen wird. Ähnliches gilt für matte und spiegelnde Oberflächen.

Ein weiteres Problem stellt die Zuordnung einer Position zu einer Adresse der Leuchte, des Betriebsgeräts und/oder des Leuchtmittels dar, die oft problematisch ist.

Die Erfindung macht es sich daher zur Aufgabe, eine benutzerdefinierte Regelung/Steuerung einer Lichtquelle zu ermöglichen und die Adressierung des Betriebsgeräts bzw. der Leuchte zu vereinfachen.

### Zusammenfassung der Erfindung

Die Erfindung löst die Aufgaben mit Vorrichtungen, dem System und dem Verfahren gemäß den unabhängigen Ansprüchen. Weitere vorteilhafte Ausführungsformen der Erfindung sind in den abhängigen Ansprüchen beschrieben.

Weitere Aspekte der Erfindung werden im Folgenden auch im Hinblick auf die beigefügten Zeichnungen beschrieben.

### Kurze Beschreibung der Zeichnungen

- Fig. 1: zeigt einen schematischen Überblick über das Gesamtsystem.
- Fig. 2: zeigt exemplarisch eine Möglichkeit für die Ermittlung von lichttechnischen Parametern.
- Fig. 3: zeigt schematisch ein mobiles Gerät.
- Fig. 4: zeigt eine exemplarische Messanordnung.
- Fig. 5: zeigt schematisch eine Ausführungsform des Gesamtsystems.

### Detaillierte Beschreibung der Erfindung

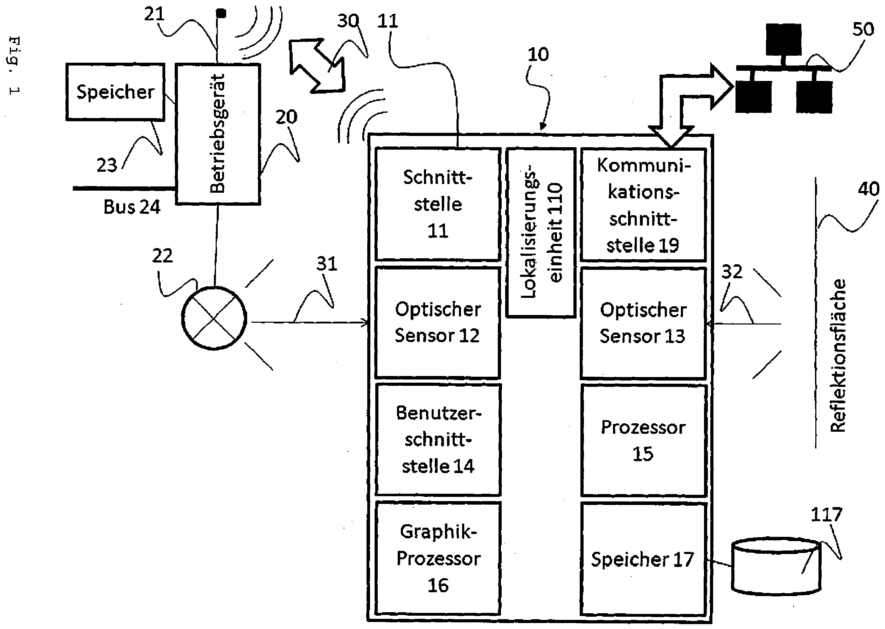

Gemäß der Erfindung, wie sie in Fig. 1 gezeigt ist, wird nun das Licht einer künstlichen Lichtquelle als Leuchtmittel 22 direkt, d.h. in Sichtverbindung mit dem Lichtaustritt des Leuchtmittels 22, mit einem mobilen Gerät 10 erfasst, wodurch gewährleistet wird, dass Umgebungseinflüsse besser ermittelt und berücksichtigt werden können, als bei einer Messung nach dem indirekten Prinzip.

Das beschriebene System ermöglicht somit eine energieeffiziente Lichtsteuerung/-Regelung, die es auch ermöglicht, eine Lichtsteuerung/-Regelung nach physiologischen Kriterien durchzuführen. Zudem erlaubt es das mobile Gerät 10 Betriebsgeräte bzw. Leuchten vereinfacht in Betrieb zu nehmen.

So wird es beispielsweise ermöglicht, je nach Jahreszeit mehr oder weniger Blauanteil dem Lichtspektrum des abgestrahlten Lichts beizumischen, um das Wohlbefinden eines Benutzers zu erhöhen. Die Lichtsteuerung/-Regelung erfolgt gemäß der Erfindung vorzugsweise durch eine Veränderung von Konfigurationsparametern in einer Steuereinheit einer Leuchte bzw. einem Betriebsgerät 20 für ein Leuchtmittel/ eine Lichtquelle bzw. durch eine Übertragung 30 von wenigstens einem Konfigurationsparametersatz mit wenigstens einem Konfigurationsparameter. Im Folgenden werden die Begriffe Steuereinheit und Betriebsgerät 20 synonym verwendet. Weiter kann ein Betriebsgerät 20 insbesondere in einer Leuchte angeordnet sein und ein Leuchtmittel/eine Lichtquelle 22 betreiben.

Das mobile Gerät 10 nach der Erfindung weist wenigstens einen optischen Sensor 12 (beispielsweise wenigstens eine Kamera und/oder einen Lichtsensor) auf. Insbesondere weist das mobile Gerät 10 zwei optische Sensoren 12, 13 auf, die auf unterschiedlichen Seiten des mobilen Geräts angeordnet sind. Über die an dem mobilen Gerät 10 angeordneten ersten und zweiten optischen Sensoren 12, 13 kann durch das mobile Gerät 10 mindestens ein lichttechnischer Parameter 31 einer Lichtquelle erfasst und/oder gemessen werden.

Das mobile Gerät 10 weist weiter eine Schnittstelle 11, insbesondere einen drahtlosen Rückkanal, auf, mit der das mobile Gerät 10 mit der Steuereinheit, z.B. dem Betriebsgerät 20 für ein Leuchtmittel (der Lichtquelle) 22 kommunizieren kann, von der wenigstens ein lichttechnischer Parameter 31 erfasst wurde.

Ein Benutzer kann über eine Benutzerschnittstelle 14 an dem mobilen Gerät 10, beispielsweise über einen auf einem berührungsempfindlichen Eingabefeld (Touchscreen) dargestellten Regler, wenigstens einen lichttechnischen Parameter 31 verändern oder einstellen. Die gewünschten Einstellungen werden dann vorzugsweise drahtlos zu dem Betriebsgerät 20 bzw. einer Schnittstelle davon übertragen.

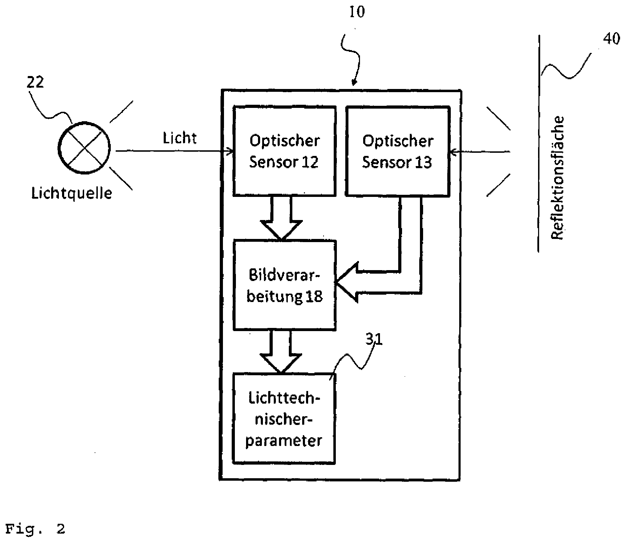

Für die Ermittlung des wenigstens einen lichttechnischen Parameters 31 kann in dem mobilen Gerät 10 eine Bildverarbeitung durchgeführt werden, die sich beispielsweise einen in dem mobilen Gerät 10 vorgesehenen Prozessor 15, einen Graphikprozessor 16 und/oder einen Speicher 17 zunutze macht. Durch die Bildverarbeitung 18 können beispielsweise aus einem durch eine Kamera (als optischer Sensor) erfassten Bild lichttechnische Parameter 31 extrahiert und/oder berechnet werden. Dies ist in Fig. 2 schematisch gezeigt, in der exemplarisch eine Möglichkeit für die Ermittlung wenigstens eines lichttechnischen Parameters mit Bildverarbeitung 18 gezeigt ist. Dabei können sowohl von dem ersten optischen Sensor 12 als auch (zusätzlich oder alternativ) von dem zweiten optischen Sensor 13 empfangene Informationen verarbeitet werden, um den lichttechnischen Parameter 31 oder einen weiteren (lichttechnischen) Parameter zu bestimmen oder zu berechnen. Beispielsweise handelt es sich dabei um ein Mobiltelefon (Smartphone) mit einer Kamera an der Vorderseite, womit diese erste Kamera den ersten optischen Sensor 12 bildet, sowie einer zweiten Kamera, die den zweiten optischen Sensor 13 bildet. Das von der Kamera erfasste Bild kann auch die Auswertung eines oder mehrerer Bilder eines von der Kamera aufgezeichneten Videos umfassen. Ein optischer Sensor 12, 13 kann selbstverständlich auch dazu eingerichtet sein, einen lichttechnischen Parameter direkt, d.h. ohne Bildverarbeitung 18, zu ermitteln, z.B. als ein Lichtsensor, der direkt einen Helligkeitswert ausgibt. Beispielsweise können so ein Helligkeitswert, eine Lichtfarbe, eine Farbtemperatur, Farbanteile des Lichtspektrums des abgegebenen Lichts und/oder andere Licht-Merkmale bestimmt werden.

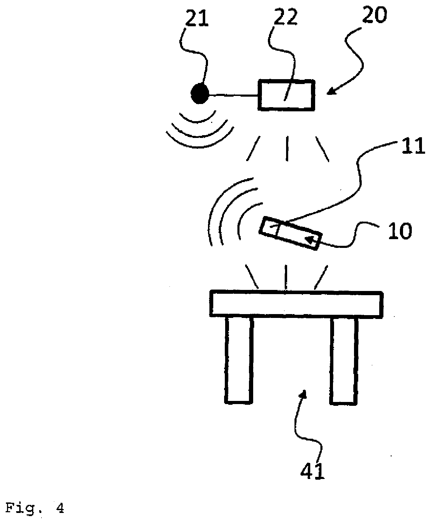

Wieder mit Blick auf Fig. 1, lässt sich insbesondere durch auf unterschiedlichen Seiten des mobilen Geräts 10 angebrachte optische Sensoren 12, 13 gleichzeitig das von dem Lichtquelle 22 abgestrahlte Licht (durch einen ersten optischen Sensor 12) und ein von einem Objekt 40 reflektiertes Licht (durch einen zweiten optischen Sensor 13) erfassen. So ist es beispielsweise möglich über den ersten optischen Sensor 12 von einer Deckenlampe abgestrahltes Licht zu analysieren und über den gegenüberliegenden zweiten optischen Sensor 13 das von einem Objekt 40, z.B. einer Tischplatte, reflektierte und/oder abgestrahlte Licht aufzunehmen, zu analysieren und ggf. auch daraus einen lichttechnischen Parameter 32 zu ermitteln und/oder einen bereits ermittelten lichttechnischen Parameter zu verändern (wie dies auch beim Beispiel der Fig. 4 erläutert wird).

Auf Grundlage der ermittelten lichttechnischen Parameter 31, 32 kann dann dem Benutzer beispielsweise eine Konfiguration für das Betriebsgerät 20 vorgeschlagen werden, die dann entweder in Form von Konfigurationsparametern an das Betriebsgerät 20 für das Leuchtmittel übermittelt 30 wird, oder vom Benutzer vorher über die Benutzerschnittstelle 14 verändert werden kann.

Ein optischer Sensor 12, 13 kann auch dafür vorgesehen sein, Oberflächeninformationen eines Objekts 40 aufzunehmen. Aus den aufgenommenen Oberflächeninformationen kann dann ein Parameter ermittelt werden, und beispielsweise mit Daten einer Tabelle und/oder Datenbank 117 verglichen werden. Ein solcher Vergleich kann selbstverständlich auch für ermittelte lichttechnische Parameter 31, 32 erfolgen.

Die Konfiguration des Betriebsgeräts 20 bzw. der Steuereinheit kann dann basierend auf Informationen, die sich aus einem Vergleich des Parameters mit der Tabelle oder Datenbank ergeben, beeinflusst oder verändert werden. Insbesondere kann so zu einem Parameter wenigstens ein Konfigurationsparameter ermittelt werden, der verwendet wird um die Konfiguration des Betriebsgeräts 20 zu verändern. Die Tabelle/Datenbank 117 kann vorzugsweise in dem mobilen Gerät 10 in dem Speicher 17 vorgehalten werden, und beispielweise Teil eines Konfigurationsprogramms sein, das auf dem mobilen Gerät, z.B. zusammen mit der Bildverarbeitung 18 und/oder der Benutzerschnittstelle 14 ausgeführt wird.

Das mobile Gerät 10 kann auch einen Identifikator, beispielsweise eine eindeutige, vom Hersteller vorgegebene Adresse oder eine zufällig vergebene Adresse, aus dem Betriebsgerät 20 auslesen. Dieser Identifikator kann dann beispielsweise zusammen mit einer Konfiguration für das Betriebsgerät 20 in dem mobilen Gerät 10 gespeichert werden.

Die Informationsübertragung, d.h. die Übertragung 30 der Konfigurationsparameter von und/oder zu dem mobilen Gerät 10, bzw. dem Betriebsgerät 20, erfolgt vorzugsweise drahtlos, z.B. über Infrarot, sichtbares Licht, Bluetooth, ANT, Zigbee,.... Sie kann jedoch auch drahtgebunden erfolgen, z.B. über USB, Ethernet etc., wobei das mobile Gerät 10 mit dem Betriebsgerät 20 bzw. der Schnittstelle 21 des Betriebsgeräts 20 verbunden ist. Die drahtlose Informationsübertragung, d.h. die Übertragung 30 der Konfigurationsparameter von dem Betriebsgerät 20 zu dem mobilen Gerät 10 kann bei einer Übertragung mittels Infrarot oder sichtbarem Licht auch über das Leuchtmittel 22 und die Schnittstelle 31 erfolgen (also das abgestrahlte Licht), wobei in diesem Fall die Schnittstelle 21 des Betriebsgeräts 20 zum Senden von Informationen an das mobile Gerät 10 mit der durch das Leuchtmittel 22 gebildet werden kann. In einem derartigen Fall kann das Betriebsgerät 20 zusätzlich weiterhin eine Schnittstelle 21 aufweisen, die zum Empfang von dem mobilen Gerät 10 über dessen Schnittstelle 11 ausgesendeten Daten / Informationen dienen kann. Der Empfang der Übertragung 30 der Konfigurationsparameter von dem Betriebsgerät 20 über die Lichtquelle 22 zu dem mobilen Gerät 10 kann bei einer Übertragung mittels Infrarot oder sichtbarem Licht durch einen optischen Sensor 12 oder 13 des mobilen Gerätes 10 erfolgen.

Im Falle einer Übertragung 30 der Konfigurationsparameter von dem Betriebsgerät 20 über das Leuchtmittel 22 zu dem mobilen Gerät 10 kann bei einer Übertragung mittels Infrarot oder sichtbarem Licht kann die Übertragung 30 durch Änderung eines lichttechnischen Parameters 31 erfolgen, wobei dieser lichttechnische Parameter 31 durch einen optischen Sensor 12 oder 13 des mobilen Gerätes 10 erfasst wird und beispielsweise mittels der Bildverarbeitung 18 intern im mobilen Gerät 10 ausgewertet wird. So ist es beispielsweise möglich, dass Auslesen eines Identifikators, beispielsweise einer eindeutigen, vom Hersteller vorgegebene Adresse oder einer zufällig vergebenen Adresse, aus dem Betriebsgerät 20 durch das mobile Gerät 10 mittels eines optischen Sensors 12 oder 13 erfolgt. So kann beispielsweise durch die Kamera 1 oder die Kamera 3 das von dem Leuchtmittel 22 abgestrahlte Licht aufgezeichnet und durch das mobile Gerät 10, vorzugsweise mittels der Bildverarbeitung 18, ausgewertet werden. Es wäre dabei möglich, dass das Betriebsgerät 20 das von dem Leuchtmittel 22 abgestrahlte Licht im Infrarot oder sichtbaren Bereich moduliert und mittels dieser Modulation den Konfigurationsparameter, vorzugsweise den Identifikator, als Information überträgt. Der optische Sensor 12 oder 13, der beispielsweise durch die Kamera 1 oder die Kamera 3 gebildet wird, kann das von dem Leuchtmittel 22 abgestrahlte Licht aufzeichnen. Die Folge der aufgezeichneten Bilder können durch das mobile Gerät 10 direkt, vorzugsweise mittels der Bildverarbeitung 18, oder indirekt, mittels einer Weiterleitung der aufgezeichneten Bilder zur Auswertung auf einer Zentraleinheit, ausgewertet werden, wobei der Konfigurationsparameter, vorzugsweise Identifikator, als moduliertes Signal erkannt und ausgewertet werden kann.

Auf diese Weise ist eine Übermittlung eines Identifikators vom Betriebsgerät 20 über das Leuchtmittel 22 durch Änderung eines lichttechnischen Parameters zu dem mobilen Gerät 10 möglich, wobei der optische Sensor 12 oder 13 zum Empfang des Identifikators genutzt wird. Der Identifikator kann wie bereits erwähnt beispielsweise eine eindeutige, vom Hersteller vorgegebene Adresse sein, die vom Hersteller in dem Betriebsgerät 20, vorzugsweise in dem Speicher 23, abgelegt ist. Der Identifikator kann auch eine zufällig vergebenen Adresse oder eine von einem Steuergerät über den Betriebsgerätebus 24 vorgegebene Adresse sein. Eine Zuweisung der Adresse kann beispielsweise derart erfolgen, dass beispielsweise über den Betriebsgerätebus 24 oder aber über das mobile Gerät 10 über die Übertragung 30 das Betriebsgerät 20 aufgefordert wird, seine Adresse als Konfigurationsparameter zu übertragen. Im Falle einer vom Hersteller vorgegebenen Adresse kann diese direkt ausgegeben werden. Wenn noch keine Adresse im Betriebsgerät 20 abgelegt ist, dann kann das Betriebsgerät 20 beispielsweise selbstständig per Zufallszahl eine Adresse ermitteln oder aber nach Anfrage von einer Zentraleinheit über den Betriebsgerätebus 24 zugewiesen erhalten. In weiterer Folge kann wie bereits erläutert das Betriebsgerät 20 einen lichttechnischen Parameter der Lichtquelle 22 derart ändern, dass diese Änderung durch das mobile Gerät 10 mittels des optischen Sensors 12 oder 13 erfasst und ausgewertet werden kann.

Es ist auch möglich, dass verschiedene Konfigurationsparameter, also nicht nur ein Identifikator, sondern beispielsweise auch allgemeine Informationen für den Benutzer (Preisinformation in einem Supermarkt, wobei beispielsweise jedes Leuchtmittel einem Produkt zugeordnet ist oder Werbebotschaften an den Benutzer) oder Statusinformationen wie Informationen über die bisherige Betriebsdauer des Betriebsgerätes 20 oder des Leuchtmittels 22, Informationen über das Leuchtmittel 22 wie beispielsweise der Typ oder die Leistung oder aufgetretene Fehler des Betriebsgerätes 20 oder des Leuchtmittels 22 über einen lichttechnischen Parameter 31 mittels des Leuchtmittels 22 ausgegeben werden und vom mobilen Gerät 10 mittels der optischen Sensoren 12, 13 erfasst werden. Grundsätzlich ist durch die Änderung eines lichttechnischen Parameters 31 eine Informationsübertragung von dem Betriebsgerät 20 über das Leuchtmittel 22 zu dem mobilen Gerät 10 möglich, wobei das mobile Gerät 10 einen optischen Sensor 12, 13 zum Empfang der übertragenen Information nutzen kann.

Die Änderung eines lichttechnischen Parameters 31 zur Übertragung einer Information kann beispielsweise durch eine Modulation der Helligkeit des Leuchtmittels 22 oder durch eine wiederholte Änderung der Farbe des Leuchtmittels 22 erfolgen.

Es ist ebenfalls möglich, dass das mobile Gerät 10 zunächst Daten zu einem externen Speicher 50, beispielsweise über eine Kommunikationsschnittstelle 19 übermittelt, von dem aus dann die Konfigurationsparameter zu dem Betriebsgerät 20, bzw. der Steuereinheit, übertragen werden. Dieser externe Speicher kann auch ein Rechner sein, beispielswiese ein PC.

Weiterhin kann der Identifikator zunächst aus dem Betriebsgerät 20, bzw. der Steuereinheit ausgelesen werden, um das Betriebsgerät 20 zu adressieren, bzw. der herstellerseitigen Adresse eine Position zuzuordnen. Das mobile Gerät 10 kann daher eine Lokalisierungseinheit 110 aufweisen, beispielsweise einen Höhenmesser, GPS, einen Kompass, einen Beschleunigungssensor, einen Funkempfänger und/oder einen Infrarotempfänger, die dazu dient, absolute und/oder relative Positionsdaten zu ermitteln. Ein Beispiel für die Ermittlung solcher Positionsdaten ist in der DE 10 2210 003 949 A1 beschrieben.

Nachdem das mobile Gerät 10 eine absolute und/oder relative Position ermittelt hat, kann es diese Position zu dem Betriebsgerät 20 übertragen 30, das dann die Position speichert und ggf. an eine Zentraleinheit über einen Betriebsgerätebus 24 übermittelt.

Über den Identifikator und/oder die Position eines Betriebsgeräts 20 für Leuchtmittel kann das mobile Gerät 10 auch automatisch vorbestimmte Konfigurationsparameter zu dem Betriebsgerät 20 übermitteln. Dies kann beispielsweise dann der erfolgen, wenn ein Benutzer bereits einen Konfigurationsparametersatz für eine bestimmte Situation, Zeit oder Position angegeben hat oder allgemein für das Betriebsgerät 20 einen Konfigurationsparametersatz hinterlegt hat.

Empfängt das mobile Gerät 10 den Identifikator des Betriebsgeräts 20, so kann es automatisch den vorbestimmten oder hinterlegten wenigstens einen Konfigurationsparametersatz mit wenigstens einem Konfigurationsparameter zu dem Betriebsgerät 20 übertragen.

Das kann, wie gesagt, auch abhängig von der Position geschehen. Beispielsweise kann ein Bereich um die Position des Betriebsgeräts 20 definiert sein. Das mobile Gerät 10 kann dann bei Eintritt in diesen Bereich die entsprechende Konfiguration an das Betriebsgerät 20 übermitteln. Es ist natürlich auch möglich, dass das mobile Gerät 10 zunächst den Benutzer darüber informiert, dass zu einem Betriebsgerät 20 zumindest eine Konfigurationsparametersatz vorliegt, der aufgrund eines Ereignisses (z.B. Eintritt in den Bereich) aktiviert werden kann. Beim Vorliegen mehrerer Konfigurationsparametersätze können diese dann dem Benutzer zur Auswahl angezeigt werden. Der Benutzer ist dann in der Lage einen vorgeschlagenen Konfigurationsparametersatz zu verändern, oder die Übertragung zu dem Betriebsgerät 20 anzustoßen.

Es kann auch vorgesehen sein, dass in dem Betriebsgerät 20 bereits wenigstens ein Konfigurationsparametersatz, z.B. in einem Speicher 23, hinterlegt ist, der zu dem mobilen Gerät 10 übertragen wird, wenn dieses in einen Bereich um das Betriebsgerät 20 eintritt.

Dieser Bereich kann z.B. dadurch definiert sein, dass eine Position für das Betriebsgerät 20 festgelegt und das Betriebsgerät 20 so eingerichtet ist, dass zumindest eine Konfiguration aktiv zu dem mobilen Gerät 10 übermittelt werden kann, wenn dieses in den Bereich um das Betriebsgerät 20 eintritt. Weiter kann der Bereich um das Betriebsgerät 20 durch eine Reichweite eines in dem Betriebsgerät 20 vorgesehenen Senders definiert sein (z.B. einer Bluetooth-Kommunikationseinheit). Ist das mobile Gerät 10 in Empfangsreichweite, so wird der wenigstens eine Konfigurationsparametersatz übertragen. Durch das mobile Gerät 10 kann dieser Konfigurationsparametersatz dann dem Benutzer angezeigt werden und von diesem ggf. verändert werden.

Werden mehrere Konfigurationsparametersätze von dem Betriebsgerät 20 zu dem mobilen Gerät 10 übertragen, so können diese beispielsweise sortiert dargestellt werden, wobei die Sortierung nach einer Häufigkeit der Konfigurationsparametersatzbenutzung erfolgen kann. Dazu kann das Betriebsgerät 20 registrieren (z.B. in dem Speicher 23), wie oft eine Konfiguration in Form eines Konfigurationsparametersatzes mit wenigstens einem Konfigurationsparameter verwendet wird und/oder als Basis für eine Konfigurationsänderung dient. Für den Benutzer ist es dadurch beispielsweise leicht möglich, auf z.B. von anderen Benutzern häufig benutzte Konfigurationen zurückzugreifen und damit schneller zu einer vorteilhaften Konfiguration zu gelangen.

Weiter kann das mobile Gerät 10 über die Kommunikationsschnittstelle 19 von einem externen Speicher 50, z.B. einen Netzwerkspeicher, Daten empfangen. Diese Daten können beispielsweise Temperatur- und/oder Zeitinformationen sein. Auch ist es möglich, dass von dem externen Speicher 50 Konfigurationen für ein oder mehrere Betriebsgeräte zu dem mobilen Gerät 10 übertragen werden. Dadurch ist es z.B. möglich, von anderen Benutzern erstellte Konfigurationen auf das mobile Gerät 10 zu übertragen, diese Konfiguration zu verändern und/oder zu benutzen und zu dem Betriebsgerät 20 zu übertragen. Die Daten können auch in die Tabelle/Datenbank 117 übertragen werden, die z.B. für Vergleiche mit lichttechnischen Parametern 31, 32 verwendet wird (siehe oben).

Das mobile Gerät 10 kann auf Basis der zugeführten Daten, beispielsweise der Temperatur- und/oder Zeitinformationen, auch dem Benutzer Konfigurationsparameteränderungen vorschlagen oder automatisch an das Betriebsgerät 20 übermitteln 30. Zu diesem Zweck kann das mobile Gerät 10 ein Auswertungsprogramm ausführen, das beispielsweise abhängig von einer Zeitinformation eine zu einer Jahreszeit passende Konfiguration erstellt, durch die die Lichtparameter des von dem Leuchtmittel abgegebenen Lichts verändert werden.

Über die Kommunikationsschnittstelle 19 des mobilen Geräts 10 ist es weiter ebenfalls möglich auf dem mobilen Gerät 10 erstellte Konfigurationen, bzw. von dem Betriebsgerät 20 ermittelte Konfigurationen, auf einen externen Speicher 50 zu übertragen. So können beispielsweise auch eine herstellerseitige Adresse des Betriebsgeräts 20 zusammen mit Positionsdaten auf den externen Speicher übertragen werden.

Über die Kommunikationsschnittstelle 19 können weiter Teile der Benutzerschnittstelle 14, bzw. die Benutzerschnittstelle 14 selbst, auf das mobile Gerät 10 übertragen werden. Im Besonderen können die Benutzerschnittstelle 14, die Konfigurationssoftware und/oder die Bildverarbeitung 18, die auf dem mobilen Gerät 10 ausgeführt wird, verändert und/oder erneuert werden. Die Benutzerschnittstelle 14 bzw. Teile davon können beispielsweise in Form von Anwendungsdaten ("Apps") zu dem mobilen Gerät 10 übertragen werden.

In einer Ausführungsform ist das mobile Gerät 10 ein mobiles Kommunikationsendgerät, z.B. ein Handy (Mobiltelefon), ein Smartphone (als spezielle Form eines Mobiltelefons), ein Tablet-Computer (PC), ein Laptop-Computer, etc.

Das Betriebsgerät 20 zum Betrieb des Leuchtmittels (Lichtquelle 22) weist eine zu der Schnittstelle im mobilen Gerät 10 korrespondierende Schnittstelle 21 auf. Insbesondere nimmt das Betriebsgerät 20 über die Schnittstelle 21 Konfigurationsparameter entgegen und speichert diese in dem in dem Betriebsgerät 20 vorgesehenen Speicher 23 und beeinflusst abhängig von den empfangenen Konfigurationsparametern die Lichtwiedergabe des Leuchtmittels. Die Schnittstelle 21 ist dabei dazu vorgesehen, Konfigurationsparameter von dem Betriebsgerät 20 zu dem mobilen Gerät 10 zu übertragen.

Das Betriebsgerät 20 kann insbesondere ein Anzahl von Konfigurationsparametersätzen mit wenigstens einem Konfigurationsparameter und beispielsweise auch die Häufigkeit, mit der ein Konfigurationsparametersatz von einem mobilen Gerät 10 ausgewählt oder verwendet wird, speichern.

Insbesondere ist das Betriebsgerät 20 dazu eingerichtet, eine Position in Abhängigkeit zur herstellerseitig vorgegebenen Adresse zu speichern.

Das Betriebsgerät 20 kann dabei in einer Leuchte vorgesehen sein und eine Busschnittstelle zur Kommunikation mit einer zentralen Einheit, beispielsweise nach dem DALI- oder dem Power Line-Standard, aufweisen. Es ist dabei möglich, dass die Konfigurationsparameter, die die lichttechnischen Parameter des Leuchtmittels 22 bzw. der Lichtquelle verändern, über einen Rechner, z.B. einem PC, zu dem Betriebsgerät 20 übertragen werden.

Erfindungsgemäß ist ebenfalls ein Konfigurationssystem vorgesehen, das ein mobiles Gerät 10 und ein Betriebsgerät, wie sie oben beschrieben sind, verwendet.

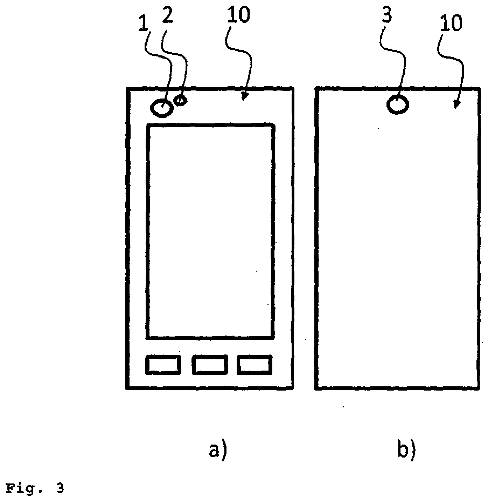

Die Fig. 3 zeigt beispielhaft das mobile Gerät 10. Die Fig. 3a zeigt dabei eine Vorderseite des mobilen Gerätes 10, während Fig. 3b eine Rückseite des mobilen Gerätes 10 zeigt.

In dem dargestellten Beispiel weist das mobile Gerät 10 auf der Vorderseite eine Kamera 1 und einen Lichtsensor 2 auf, während auf der anderen Seite des mobilen Gerätes eine Kamera 3 angeordnet ist. Dieses in Fig. 3 dargestellte mobile Gerät 10 zeigt beispielhaft wie das in den Fig. 1 und Fig. 2 dargestellte mobile Gerät 10 nach außen hin aussehen kann. Der erste optische Sensor 12 kann wie bereits erwähnt durch eine Kamera 1 gebildet werden, während der zweite optische Sensor 13 durch einen Lichtsensor 2 gebildet werden kann. Alternativ könnte beispielsweise auch der zweite optische Sensor 13 durch eine zweite Kamera auf der Rückseite des mobilen Gerätes 10 gebildet werden.

Die Fig. 4 zeigt eine exemplarische Anordnung des mobilen Gerätes 10 zur Erfassung lichttechnischer Parameter. Dabei nimmt das Gerät 10 Licht von einem Leuchtmittel 22, beispielsweise über die Kamera 1 (als ersten optischen Sensor 12) oder den Lichtsensor 2 (als zweiten optischen Sensor 13), und gleichzeitig von einem Tisch 41 reflektiertes Licht auf, beispielsweise über die Kamera 3. Schematisch ist ebenfalls die Kommunikation zwischen einer Schnittstelle 11 des mobilen Gerätes 10 und einer Schnittstelle 21 eines Betriebsgeräts 20 für den Betrieb des Leuchtmittels 22 gezeigt. Das mobile Gerät 10 kann auch das Umgebungslicht erfassen, bspw. kann durch zwischenzeitliches Ändern der Helligkeit oder vorzugsweise kurzzeitiges Abschalten des Leuchtmittels 22 auf das Umgebungslicht geschlossen werden.

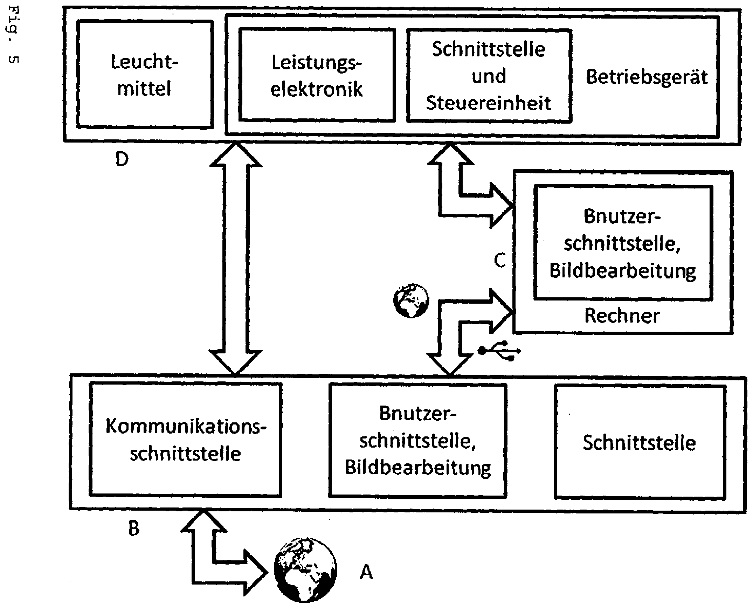

In Fig. 5 ist schematisch das erfindungsgemäße Verfahren gezeigt. Eine Leuchte D sendet einen Lichtstrom aus, welcher über das mobile Gerät B erfasst wird.

Der Lichtstrom kann durch den wenigstens einen optischen Sensor erfasst und ausgewertet werden. Das mobile Gerät B kann entweder die Leuchte, bzw. ein darin vorhandenes Betriebsgerät, durch Veränderung von Konfigurationsparametern direkt steuern, oder Konfigurationsparametern zunächst zu einem Rechner, z.B. einem PC, übertragen, von dem aus dann die Konfigurationsparameter zu der Leuchte D übertragen werden.

Durch einen Netzwerkanschluss des mobilen Gerätes B kann zudem eine Vernetzung relevanter Daten, z.B. der Konfigurationsparameter, erfolgen und andere Daten, wie z.B. eine Umgebungstemperatur oder die Jahreszeit, können bei der Konfiguration berücksichtigt werden.

Bei mehreren vorhandenen optischen Sensoren, beispielsweise bei zwei Kameras 1,3, ist die gleichzeitige Erfassung mehrerer lichttechnischer Parameter möglich, z.B. die Erfassung von Lichtstrom-Parametern, die Erfassung von Eigenschaften eines Objekts als Objekt-Parameter, z.B. betreffend eine Objektoberflächeneigenschaft, und/oder die Erfassung von Auflagefläche-Parametern.

Zusammengefasst lassen sich die Vorteile der Erfindung wie folgt charakterisieren: Das mobile Gerät 10 erfasst mindestens einen lichttechnischen Parameter (z.B. einer Bestrahlungsstärke, eine Farbtemperatur, eine Farbe ...) direkt am gewünschten Ort und regelt/steuert das Leuchtmittel 22 beispielsweise über einen hinterlegten Algorithmus durch Veränderung der Konfigurationsparameter in dem Betriebsgerät. Dadurch können Fehlerquellen, z.B. Störquellen, die aus einer Beschaffenheit bzw. Farbe eines Objekts resultieren, aber beispielsweise auch vorgeschaltete oder verdeckte Leuchtengläser, bei der Konfiguration des Betriebsgerätes berücksichtigt werden.

Diese Daten können über eine Netzanbindung, z.B. über eine Internetanbindung des mobilen Gerätes, ausgetauscht und bei der Konfiguration berücksichtigt und verwendet werden.

Beispielsweise kann eine Außentemperatur ermittelt werden, und automatisch eine Farbmischung durch eine Konfigurationsparameterveränderung geändert werden, um ein anderes Licht zu erzeugen. Ein anderes Beispiel ist die Veränderung des Blauanteils in dem von dem Leuchtmittel 22 abgegebenen Licht. Der Blauanteil kann z.B. jahreszeitabhängig verändert werden, um beispielsweise einen angenehmeren Lichteindruck hervorzurufen.

Schließlich kann die Energieeffizienz gesteigert werden, da beispielsweise die Lichtabgabe durch die Veränderung der Konfigurationsparameter an Oberflächenmerkmale, beispielsweise schwarze oder dunkle bzw. weiße oder helle Tischoberflächen, angepasst werden kann.

Die Inbetriebnahme von Leuchten, bzw. Betriebsgeräten, ist ebenfalls vereinfacht, da durch die Lokalisierungseinheit in dem mobilen Gerät 10 eine Position ermittelt werden kann, die dann zu dem Betriebsgerät 20 übermittelt werden kann. Dabei kann der Höhenmesser für eine Stockwerkserfassung genutzt werden, während GPS, Kompass und Beschleunigungssensor sowie der optische Sensor für die Positionserfassung ausgewertet werden können.

Auch kann ausgehend von einem Referenzpunkt und einer Ermittlung einer relativen Position dazu die Position des mobilen Gerätes und so auch die Position der Leuchte, bzw. des entsprechenden Betriebsgerätes, ermittelt werden. Auch eine drahtlose Kommunikationsschnittstelle des mobilen Gerätes, beispielsweise ein GSM-Modul oder ein WLAN-Modul, kann die Positionsfindung durch die Ermittlung von Sendemast-Positionen (als fixe Referenzpunkte) und/ oder Laufzeitmessungen unterstützen. Eine derartige Positionsfindung kann beispielsweise mit Hilfe einer Zentraleinheit erfolgen, wo beispielsweise eine echtzeittaugliche Software auf einem Zentralcomputer läuft, und anhand der übermittelten Laufzeitmessungen und Informationen zu Abstand und Richtung zu den fixen Referenzpunkten eine Positionsfindung durchführt. Die ermittelte Position kann von der Zentraleinheit an das mobile Gerät 10 und / oder Betriebsgerät übermittelt werden.

Die Positionsfindung kann zusätzlich oder alternativ auch anhand der Auswertung von mittels der Kamera 1 (als ersten optischen Sensor 12) aufgenommener Bilder erfolgen. Dabei kann mittels der Kamera 1 ein Bild der zu erkennenden Leucht mit dem Betriebsgerät 20 und dem Leuchtmittel 22 aufgezeichnet werden, wobei auf diesem Bild die Leuchte und deren Umgebung aufgenommen werden. Dieses aufgenommene Bild kann anhand eines Vergleichs mit Referenzbildern zur Positionsfindung genutzt werden, beispielsweise durch ein Erkennen von markanten Punkten an der Leuchte oder der Umgebung oder auch mittels eines beispielsweise auf der Leuchte aufgebrachten Identifikationscodes (kann beispielsweise ein Strichcode sein). Eine derartige Auswertung der Bilder kann beispielsweise auf dem mobilen Gerät 10 (insbesondere mittels der Bildverarbeitung 18) oder auch auf einer Zentraleinheit (einem Computer), wobei in diesem Fall die Bilder und die Ergebnisse der Auswertung über die Kommunikationsschnittstelle 19 übertragen werden, erfolgen.

Konfigurationsparameter und Positionsparameter können auch in dem mobilen Gerät 10 gespeichert sein und erst bei Verbindung mit einem anderen Rechner, bzw. bei Anschluss des mobilen Gerätes an einen Betriebsgerätebus, zu einer Zentraleinheit übermittelt werden. Die vorliegende Erfindung kann auch dazu verwendet werden, um natürliches Umgebungslicht in die Leuchtmittelkonfiguration einzubeziehen, bzw. abhängig von der Position des mobilen Gerätes Leuchtmittel zu aktivieren und/oder zu deaktivieren.

## Patentansprüche

1. Mobiles Kommunikationsendgerät (10), insbesondere Smartphone, zur Konfiguration wenigstens eines Betriebsgeräts (20) zum Betrieb eines Leuchtmittels (22), wobei das mobile Kommunikationsendgerät (10) wenigstens einen optischen Sensor (12,13), der vorgesehen ist, lichttechnische Parameter aufweisend eine Helligkeitsinformation zu erfassen, aufweist,
wobei das mobile Kommunikationsendgerät (10) eine Schnittstelle (11) zur drahtlosen Kommunikation mit dem wenigstens einen Betriebsgerät (20) aufweist, und insbesondere dazu eingerichtet ist, über die Schnittstelle (11) Konfigurationsparameter mit dem Betriebsgerät (20) auszutauschen, wobei die Konfigurationsparameter von und/oder zu dem mobilen Kommunikationsgerät (10) übertragen werden, und auf Basis der erfassten lichttechnischen Parameter die Lichtwiedergabe des Leuchtmittels (22) zu regeln, wobei das Regeln durch eine Veränderung von Konfigurationsparametern erfolgt;
wobei das mobile Kommunikationsendgerät (10) dazu eingerichtet ist, das Betriebsgerät (20) mittels eines Identifikators automatisch zu erkennen und vorbestimmte Konfigurationsparameter an das Betriebsgerät (20) zu übermitteln;
**dadurch gekennzeichnet, dass** das mobile Kommunikationsendgerät (10) dazu eingerichtet ist, Positionsdaten von dem Betriebsgerät (20) und/oder der Leuchte auszulesen und zu speichern, und vorbestimmte Konfigurationsparameter automatisch und/oder auf eine Benutzerinteraktion hin an das Betriebsgerät (20) zu übermitteln, wenn sich das mobile Kommunikationsendgerät (10) in einem bestimmten Abstand von dem Betriebsgerät (20) befindet.

2. Mobiles Kommunikationsendgerät (10) nach Anspruch 1, wobei der wenigstens eine optische Sensor (12, 13) ein Lichtsensor (3), ein Bildsensor und/oder eine Kamera (1) ist und wobei der optische Sensor (12, 13) dazu eingerichtet ist, lichttechnische Parameter, wie z.B. eine Helligkeitsinformation, eine Bestrahlungsstärke eines Objekts, eine Oberflächeneigenschaft eines Objekts, eine Farbtemperatur, eine Farbe und/oder Lichttemperatur zu bestimmen.

3. Mobiles Kommunikationsendgerät (10) nach Anspruch 1 oder 2, wobei das mobile Kommunikationsendgerät wenigstens eine Lokalisierungseinheit (110) aufweist, die vorgesehen ist, absolute und/oder relative Positionsparameter des mobilen Gerätes (10) zu erfassen, und wobei die wenigstens eine Lokalisierungseinheit (110) einen Höhenmesser, einen GPS-Empfänger und/oder einen Kompass aufweist und/oder das mobile Kommunikationsendgerät (10) dazu eingerichtet ist, Funksignale und/oder Lichtsignale zu empfangen.

4. Mobiles Kommunikationsendgerät (10) nach einem der vorhergehenden Ansprüche, wobei das mobile Kommunikationsendgerät (10) dazu eingerichtet ist, wenigstens einen Konfigurationsparameter und insbesondere einen Identifikator von dem Betriebsgerät (20) auszulesen und zu speichern.

5. Mobiles Kommunikationsendgerät (10) nach einem der vorhergehenden Ansprüche, wobei das mobile Kommunikationsendgerät (10) weiter eine Benutzerschnittstelle (14) aufweist, die vorgesehen ist, Konfigurationsparameter, insbesondere in Abhängigkeit von den erfassten lichttechnischen Parametern und/oder den Positionsparametern, auf eine Benutzerinteraktion hin zu verändern, und wobei das mobile Kommunikationsendgerät (10) dazu eingerichtet ist, die veränderten Konfigurationsparameter an das Betriebsgerät (20) oder die Leuchte zu übertagen.

6. Mobiles Kommunikationsendgerät (10) nach einem der vorhergehenden Ansprüche, wobei das mobile Kommunikationsendgerät (10) dazu eingerichtet ist, eine Position aus den Positionsparametern zu bestimmen und zu dem Betriebsgerät (20) zu übermitteln.

7. Mobiles Kommunikationsendgerät (10) nach einem der vorhergehenden Ansprüche, wobei das mobile Kommunikationsendgerät (10) dazu eingerichtet ist, aus wenigstens einem Konfigurationsparametersatz mit wenigstens einem Konfigurationsparameter, der in dem Betriebsgerät (20) hinterlegt und/oder in dem Betriebsgerät (20) oder der Leuchte gespeichert ist, automatisch und/oder auf eine Benutzerinteraktion hin einen Konfigurationsparametersatz für den Betrieb des Leuchtmittels (22) auszuwählen, und wobei das mobile Kommunikationsendgerät (10) dazu eingerichtet ist, den wenigstens einen, in dem Betriebsgerät (20) hinterlegten und/oder in dem Betriebsgerät (20) gespeicherten, Konfigurationsparametersatz anzuzeigen, z.B. gemäß einer Sortierung, insbesondere nach einer Häufigkeit der Wahl des wenigstens einen Konfigurationsparametersatzes.

8. Mobiles Kommunikationsendgerät (10) nach einem der vorhergehenden Ansprüche, wobei die Schnittstellen (11) für eine drahtlose und/oder drahtgebundene Kommunikation eingerichtet sind.

9. Mobiles Kommunikationsendgerät (10) nach einem der vorhergehenden Ansprüche, wobei das mobile Kommunikationsendgerät (10) eine Kommunikationsschnittstelle aufweist und dazu eingerichtet ist, über die Kommunikationsschnittstelle (19) von einem externen Speicher (50) Daten zu empfangen, z.B. Temperatur- und/oder Zeitinformationen, und daraufhin, automatisch und/oder auf eine Benutzerinteraktion hin Konfigurationsparameter über die Schnittstelle (11) zur Kommunikation mit dem Betriebsgerät (20) zu übermitteln, und wobei das mobile Kommunikationsendgerät (10) dazu eingerichtet ist, Konfigurationsparameter und/oder einen Konfigurationsparametersatz zu einem externen Speicher (50) über die Kommunikationsschnittstelle (19) zu übertagen.

10. Mobiles Kommunikationsendgerät (10) nach Anspruch 9, wobei das mobile Kommunikationsendgerät (10) dazu eingerichtet ist, Daten zur Darstellung der Benutzerschnittstelle (14) und/oder Teilen davon, Daten zur Durchführung der Bildverarbeitung (18), wenigstens einen Betriebsgeräte-/Leuchtenidentifikator und/oder Positionsdaten für wenigstens ein Betriebsgerät (20) über die Kommunikationsschnittstelle (19) zu empfangen.

11. Betriebsgerät (20) zum Betrieb eines Leuchtmittels, wobei das Betriebsgerät (20) eine Schnittstelle (21) zur drahtlosen Kommunikation mit wenigstens einem mobilen Kommunikationsendgerät (10) nach einem der vorhergehenden Ansprüche aufweist, und wobei das Betriebsgerät (20) insbesondere dazu eingerichtet ist, über die Schnittstelle (21) Konfigurationsparameter mit dem mobilen Kommunikationsendgerät (10) auszutauschen,
wobei die Konfigurationsparameter von und/oder zu dem mobilen Kommunikationsgerät (10) übertragen werden, wenigstens einen von dem mobilen Kommunikationsendgerät (10) übermittelten Konfigurationsparameter zu speichern, und die Lichtwiedergabe des Leuchtmittels (22) abhängig von dem wenigstens einen übermittelten Konfigurationsparameter zu regeln;
wobei das das Betriebsgerät (20) dazu eingerichtet ist, mittels eines Identifikators durch das mobile Kommunikationsendgerät (10) automatisch erkannt zu werden und vorbestimmte Konfigurationsparameter von dem mobilen Kommunikationsendgerät (10) zu empfangen;
**dadurch gekennzeichnet, dass** das Betriebsgerät (20) dazu eingerichtet ist, seine Positionsdaten und/oder der Leuchte an das mobile Kommunikationsendgerät (10) zu übermitteln, und vorbestimmte Konfigurationsparameter von dem mobilen Kommunikationsendgerät (10) zu empfangen, wenn sich das mobile Kommunikationsendgerät (10) in einem bestimmten Abstand von dem Betriebsgerät (20) befindet.

12. Betriebsgerät (20) nach Anspruch 11, wobei das Betriebsgerät (20) dazu eingerichtet ist, einen Konfigurationsparametersatz mit wenigstens einem Konfigurationsparameter, z.B. mit einer Häufigkeit der Wahl des Konfigurationsparametersatzes, zu speichern und/oder wenigstens einen Konfigurationsidentifikator für den Konfigurationsparametersatz zu dem mobilen Kommunikationsendgerät (10) zu übermitteln.

13. Betriebsgerät (20) nach Anspruch 11 oder 12, wobei das Betriebsgerät (20) dazu eingerichtet ist, seine Position auf Basis von empfangenen Funk- und/oder Lichtsignalen zu bestimmen.

14. Leuchte mit einem Betriebsgerät (20) nach einem der Ansprüche 11 bis 13.

15. Konfigurationssystem mit
- wenigstens einem Betriebsgerät (20) zum Betrieb eines Leuchtmittels (22) und/oder einer Leuchte und
- wenigstens einem mobilen Kommunikationsendgerät (10) zur Regelung oder Steuerung des Leuchtmittels, wobei das mobile Kommunikationsendgerät (10) wenigstens einen optischen Sensor (12, 13), der vorgesehen ist, lichttechnische Parameter aufweisend eine Helligkeitsinformation, zu erfassen, aufweist, wobei das Betriebsgerät (20) und das mobile Kommunikationsendgerät (10) jeweils eine drahtlose Schnittstelle (21,11) aufweisen, die jeweils dazu eingerichtet ist, Konfigurationsparameter zwischen dem Betriebsgerät (20) und dem mobilen Kommunikationsendgerät (10) auszutauschen, wobei die Konfigurationsparameter von und/oder zu dem mobilen Kommunikationsgerät (10) übertragen werden, und wobei das mobile Kommunikationsendgerät (10) insbesondere dazu eingerichtet ist, über die Schnittstelle (11) auf Basis der erfassten lichttechnischen Parameter die Lichtwiedergabe des Leuchtmittels zu regeln, wobei das Regeln durch eine Veränderung von Konfigurationsparametern erfolgt;
wobei das mobile Kommunikationsendgerät (10) dazu eingerichtet ist, das Betriebsgerät (20) mittels eines Identifikators automatisch zu erkennen und vorbestimmte Konfigurationsparameter an das Betriebsgerät (20) zu übermitteln;
**dadurch gekennzeichnet, dass** das mobile Kommunikationsendgerät (10) dazu eingerichtet ist, Positionsdaten von dem Betriebsgerät (20) und/oder der Leuchte auszulesen und zu speichern, und vorbestimmte Konfigurationsparameter automatisch und/oder auf eine Benutzerinteraktion hin an das Betriebsgerät (20) zu übermitteln, wenn sich das mobile Kommunikationsendgerät (10) in einem bestimmten Abstand von dem Betriebsgerät (20) befindet.

16. System nach Anspruch 15, wobei das mobile Kommunikationsendgerät (10) ein mobiles Kommunikationsendgerät (10) nach einem der Ansprüche 1 bis 11 ist, und wobei das Betriebsgerät (20) zum Betrieb des Leuchtmittels ein Betriebsgerät (20) nach einem der Ansprüche 11 bis 13 ist.

17. Verfahren zur Konfiguration eines Betriebsgeräts (20) zum Betrieb eines Leuchtmittels, wobei
ein mobiles Kommunikationsendgerät (10) mittels wenigstens einem optischen Sensor (12,13) lichttechnische Parameter aufweisend eine Helligkeitsinformation erfasst, wobei das mobile Kommunikationsendgerät (10) und das Betriebsgerät (20) über jeweils eine drahtlose Schnittstelle (11, 21) Konfigurationsparameter austauschen, wobei das mobile Kommunikationsendgerät (10) insbesondere über die Schnittstelle (11) auf Basis der erfassten lichttechnischen Parameter die Lichtwiedergabe des Leuchtmittels (22) regelt;
wobei das mobile Kommunikationsendgerät (10) das Betriebsgerät (20) mittels eines Identifikators automatisch erkennt und vorbestimmte Konfigurationsparameter an das Betriebsgerät (20) übermittelt;
**dadurch gekennzeichnet, dass** das mobile Kommunikationsendgerät (10) Positionsdaten von dem Betriebsgerät (20) und/oder der Leuchte ausliest und speichert, und vorbestimmte Konfigurationsparameter automatisch und/oder auf eine Benutzerinteraktion hin an das Betriebsgerät (20) übermittelt, wenn sich das mobile Kommunikationsendgerät (10) in einem bestimmten Abstand von dem Betriebsgerät (20) befindet.

## Claims

1. Mobile communication end device (10), in particular a smartphone, for configuring at least one operating device (20) for operating a luminous element (22),
wherein the mobile communication end device (10) has at least one optical sensor (12, 13) which is provided for detecting photometric parameters comprising brightness information;
wherein the mobile communication end device (10) has an interface (11) for wireless communication with the at least one operating device (20), and in particular is configured to exchange configuration parameters with the operating device (20) via the interface (11), wherein the configuration parameters are transmitted from and/or to the mobile communication device (10), and to control the light reproduction of the luminous element (22) on the basis of the detected photometric parameters, wherein the control takes place by changing configuration parameters;
wherein the mobile communication end device (10) is configured to automatically recognize the operating device (20) by means of an identifier and to transmit predetermined configuration parameters to the operating device (20);
**characterized in that** the mobile communication end device (10) is configured to read and save position data from the operating device (20) and/or the lamp, and to transmit predetermined configuration parameters automatically and/or in response to a user interaction to the operating device (20) if the mobile communication end device (10) is located at a certain distance from the operating device (20).

2. Mobile communication end device (10) according to claim 1, wherein the at least one optical sensor (12, 13) is a light sensor (3), an image sensor, and/or a camera (1), and wherein the optical sensor (12, 13) is configured to determine photometric parameters, such as brightness information, the irradiance of an object, the surface property of an object, a color temperature, a color, and/or a light temperature.

3. Mobile communication end device (10) according to claim 1 or 2, wherein the mobile communication end device comprises at least one location unit (110) which is provided to detect absolute and/or relative position parameters of the mobile device (10), and wherein the at least one location unit (110) comprises an altimeter, a GPS receiver, and/or a compass, and/or the mobile communication end device (10) is configured to receive radio signals and/or light signals.

4. Mobile communication end device (10) according to one of the preceding claims, wherein the mobile communication end device (10) is configured to read and save at least one configuration parameter, and in particular an identifier, from the operating device (20).

5. Mobile communication end device (10) according to one of the preceding claims, wherein the mobile communication end device (10) furthermore comprises a user interface (14) which is provided to change configuration parameters, in particular depending on the detected photometric parameters and/or the position parameters, in response to a user interaction; and wherein the mobile communication end device (10) is configured to transmit the changed configuration parameters to the operating device (20) or the lamp.

6. Mobile communication end device (10) according to one of the preceding claims, wherein the mobile communication end device (10) is configured to determine a position from the position parameters and to transmit said position to the operating device (20).

7. Mobile communication end device (10) according to one of the preceding claims, wherein the mobile communication end device (10) is configured to select, automatically and/or in response to a user interaction, a configuration parameter set for the operation of the luminous element (22) from at least one configuration parameter set with at least one configuration parameter stored in the operating device (20) and/or saved in the operating device (20) or the lamp, and wherein the mobile communication end device (10) is configured to display the at least one configuration parameter set stored in the operating device (20) and/or saved in the operating device (20), for example according to a sorting, in particular according to a frequency of selection of the at least one configuration parameter set.

8. Mobile communication terminal (10) according to one of the preceding claims, wherein the interfaces (11) are configured for wireless and/or wired communication.

9. Mobile communication end device (10) according to one of the preceding claims, wherein the mobile communication end device (10) has a communication interface and is configured to receive data, for example temperature and/or time information, from an external memory (50) via the communication interface (19), and to then transmit configuration parameters via the interface (11) for communication with the operating device (20) automatically and/or in response to a user interaction; and wherein the mobile communication end device (10) is configured to transmit configuration parameters and/or a configuration parameter set to an external memory (50) via the communication interface (19).

10. Mobile communication end device (10) according claim 9, wherein the mobile communication end device (10) is configured to receive, via the communication interface (19), data for representing the user interface (14) and/or portions thereof, data for performing the image processing (18), at least one operating device/lamp identifier, and/or position data for at least one operating device (20).

11. Operating device (20) for operating a luminous element, wherein the operating device (20) has an interface (21) for wireless communication with at least one mobile communication end device (10) according to one of the preceding claims; and wherein the operating device (20) is in particular configured to exchange configuration parameters with the mobile communication end device (10) via the interface (21), wherein the configuration parameters are transmitted from and/or to the mobile communication device (10), to save at least one configuration parameter transmitted by the mobile communication end device (10), and to control the light reproduction of the luminous element (22) depending on the at least one transmitted configuration parameter;
wherein the operating device (20) is configured to be automatically recognized by the mobile communication end device (10) by means of an identifier, and to receive predetermined configuration parameters from the mobile communication end device (10);
**characterized in that** the operating device (20) is configured to transmit its position data and/or the position data of the lamp to the mobile communication end device (10), and to receive predetermined configuration parameters from the mobile communication end device (10) if the mobile communication end device (10) is located at a certain distance from the operating device (20).

12. Operating device (20) according to claim 11, wherein the operating device (20) is configured to save a configuration parameter set with at least one configuration parameter, for example with a frequency of selection of the configuration parameter set, and/or to transmit at least one configuration identifier for the configuration parameter set to the mobile communication end device (10).

13. Operating device (20) according to claim 11 or 12, wherein the operating device (20) is configured to determine its position on the basis of received radio and/or light signals.

14. Lamp having an operating device (20) according to one of claims 11 to 13.

15. Configuration system with
- at least one operating device (20) for operating a luminous element (22) and/or a lamp, and
- at least one mobile communication end device (10) for regulating or controlling the luminous element, wherein the mobile communication end device (10) has at least one optical sensor (12, 13) which is provided to detect photometric parameters comprising brightness information; wherein the operating device (20) and the mobile communication end device (10) respectively have a wireless interface (21, 11) which is configured to exchange configuration parameters between the operating device (20) and the mobile communication end device (10); wherein the configuration parameters are transmitted from and/or to the mobile communication device (10); and wherein the mobile communication end device (10) is configured in particular to control the light reproduction of the luminous element via the interface (11) on the basis of the detected photometric parameters, wherein the control takes place by changing configuration parameters;
wherein the mobile communication end device (10) is configured to automatically recognize the operating device (20) by means of an identifier, and to transmit predetermined configuration parameters to the operating device (20);
**characterized in that** the mobile communication end device (10) is configured to read and save position data from the operating device (20) and/or the lamp, and to transmit predetermined configuration parameters automatically and/or in response to a user interaction to the operating device (20) if the mobile communication end device (10) is located at a certain distance from the operating device (20).

16. System according to claim 15, wherein the mobile communication end device (10) is a mobile communication end device (10) according to one of claims 1 to 11, and wherein the operating device (20) for operating the luminous element is an operating device (20) according to one of claims 11 to 13.

17. Method for configuring an operating device (20) for operating a luminous element, wherein
a mobile communication end device (10) detects photometric parameters comprising brightness information by means of at least one optical sensor (12, 13), wherein the mobile communication end device (10) and the operating device (20) exchange configuration parameters via a wireless interface (11, 21) in each case, wherein the mobile communication end device (10) controls the light reproduction of the luminous element (22) in particular via the interface (11) on the basis of the detected photometric parameters;
wherein the mobile communication end device (10) automatically recognizes the operating device (20) by means of an identifier and transmits predetermined configuration parameters to the operating device (20);
**characterized in that** the mobile communication end device (10) reads and saves position data from the operating device (20) and/or the lamp and transmits predetermined configuration parameters automatically and/or in response to a user interaction to the operating device (20) if the mobile communication end device (10) is located at a certain distance from the operating device (20).

## Revendications

1. Terminal mobile de communication (10), en particulier mobile multifonction (smartphone), pour la configuration d'au moins un appareil de fonctionnement (20) pour le fonctionnement d'un moyen d'éclairage (22),
le terminal mobile de communication (10) présentant au moins un capteur optique (12, 13), destiné à détecter des paramètres techniques de la lumière présentant une information de clarté,
le terminal mobile de communication (10) présentant une interface (11) pour la communication sans fil avec ledit au moins un appareil de fonctionnement (20) et étant en particulier conçu pour échanger, via l'interface (11), des paramètres de configuration avec l'appareil de fonctionnement (20), les paramètres de configuration étant transférés à partir du et/ou vers l'appareil de communication mobile (10), et pour réguler la diffusion de la lumière du moyen d'éclairage (22) sur la base des paramètres techniques de la lumière détectés, la régulation étant effectuée par une modification de paramètres de configuration ;
le terminal mobile de communication (10) étant conçu pour détecter automatiquement l'appareil de fonctionnement (20) au moyen d'un identifiant et pour transmettre des paramètres de configuration prédéfinis à l'appareil de fonctionnement (20) ;
**caractérisé en ce que** le terminal mobile de communication (10) est conçu pour lire et enregistrer des données de position de l'appareil de fonctionnement (20) et/ou du luminaire et pour transmettre des paramètres de configuration prédéfinis automatiquement et/ou suite à une interaction d'utilisateur à l'appareil de fonctionnement (20) lorsque le terminal de communication mobile (10) se trouve à une distance déterminée de l'appareil de fonctionnement (20).

2. Terminal mobile de communication (10) selon la revendication 1, ledit au moins un capteur optique (12, 13) étant un capteur de lumière (3), un capteur d'image et/ou une caméra (1) et le capteur optique (12, 13) étant conçu pour déterminer des paramètres techniques de lumière, comme une information de clarté, une intensité de rayonnement d'un objet, une propriété de surface d'un objet, une température de couleur, une couleur et/ou une température de lumière.

3. Terminal mobile de communication (10) selon la revendication 1 ou 2, le terminal mobile de communication présentant au moins une unité de localisation (110), qui est destinée à détecter des paramètres de position absolue et/ou relative de l'appareil mobile (10) et ladite au moins une unité de localisation (110) présentant un dispositif de mesure de hauteur, un récepteur GPS et/ou une boussole et/ou le terminal mobile de communication (10) étant conçu pour recevoir des signaux radio et/ou des signaux lumineux.

4. Terminal mobile de communication (10) selon l'une quelconque des revendications précédentes, le terminal mobile de communication (10) étant conçu pour lire et enregistrer au moins un paramètre de configuration et en particulier un identifiant de l'appareil de fonctionnement (20).

5. Terminal mobile de communication (10) selon l'une quelconque des revendications précédentes, le terminal mobile de communication (10) présentant en outre une interface utilisateur (14) destinée à modifier les paramètres de configuration, en particulier en fonction des paramètres techniques de lumière et/ou des paramètres de position détectés, suite à une interaction de l'utilisateur et le terminal mobile de communication (10) étant conçu pour transmettre les paramètres de configuration modifiés à l'appareil de fonctionnement (20) ou au luminaire.

6. Terminal mobile de communication (10) selon l'une quelconque des revendications précédentes, le terminal mobile de communication (10) étant conçu pour déterminer une position à partir des paramètres de position et pour la transmettre à l'appareil de fonctionnement (20).

7. Terminal mobile de communication (10) selon l'une quelconque des revendications précédentes, le terminal mobile de communication (10) étant conçu pour sélectionner, parmi au moins un jeu de paramètres de configuration présentant au moins un paramètre de configuration, qui est déposé dans l'appareil de fonctionnement (20) et/ou enregistré dans l'appareil de fonctionnement (20) ou dans le luminaire, automatiquement et/ou suite à une interaction de l'utilisateur, un jeu de paramètres de configuration pour le fonctionnement du moyen d'éclairage (22) et le terminal mobile de communication (10) étant conçu pour afficher ledit au moins un jeu de paramètres de configuration déposé dans l'appareil de fonctionnement (20) et/ou enregistré dans l'appareil de fonctionnement (20), par exemple en fonction d'un tri, en particulier selon une fréquence de sélection dudit au moins un jeu de paramètres de configuration.

8. Terminal mobile de communication (10) selon l'une quelconque des revendications précédentes, les interfaces (11) étant conçues pour une communication sans fil et/ou filaire.

9. Terminal mobile de communication (10) selon l'une quelconque des revendications précédentes, le terminal mobile de communication (10) présentant une interface de communication et étant conçu pour recevoir, via l'interface de communication (19), des données provenant d'une mémoire externe (50), par exemple des informations de température et/ou de temps, et pour transmettre ensuite, automatiquement et/ou suite à une interaction de l'utilisateur, les paramètres de configuration, via l'interface (11), pour une communication avec l'appareil de fonctionnement (20) et le terminal mobile de communication (10) étant conçu pour transmettre des paramètres de configuration et/ou un jeu de paramètres de configuration à une mémoire externe (50) via l'interface de communication (19).

10. Terminal mobile de communication (10) selon la revendication 9, le terminal mobile de communication (10) étant conçu pour recevoir, via l'interface de communication (19), des données pour la représentation de l'interface utilisateur (14) et/ou des parties de celle-ci, des données pour réaliser le traitement d'image (18), au moins un identifiant d'appareil de fonctionnement/de luminaire et/ou des données de position pour au moins un appareil de fonctionnement (20).

11. Appareil de fonctionnement (20) pour le fonctionnement d'un moyen d'éclairage, l'appareil de fonctionnement (20) présentant une interface (21) pour la communication sans fil avec au moins un terminal mobile de communication (10) selon l'une quelconque des revendications précédentes et l'appareil de fonctionnement (20) étant en particulier conçu pour échanger, via l'interface (21), des paramètres de configuration avec le terminal mobile de communication (10),
les paramètres de configuration étant transmis à partir du et/ou vers l'appareil mobile de communication (10), pour enregistrer au moins un paramètre de configuration transmis à partir du terminal mobile de communication (10) et pour réguler la diffusion de lumière du moyen d'éclairage (22) en fonction dudit au moins un paramètre de configuration transmis ;
l'appareil de fonctionnement (20) étant conçu pour être reconnu automatiquement, au moyen d'un identifiant, par le terminal mobile de communication (10) et pour recevoir des paramètres de configuration prédéfinis à partir du terminal mobile de communication (10) ;
**caractérisé en ce que** l'appareil de fonctionnement (20) est conçu pour transmettre ses données de position et/ou celles du luminaire au terminal mobile de communication (10) et pour recevoir des paramètres de configuration prédéfinis à partir du terminal mobile de communication (10) lorsque le terminal mobile de communication (10) se trouve à une distance déterminée de l'appareil de fonctionnement (20).

12. Appareil de fonctionnement (20) selon la revendication 11, l'appareil de fonctionnement (20) étant conçu pour enregistrer un jeu de paramètres de configuration avec au moins un paramètre de configuration, par exemple avec une fréquence de la sélection du jeu de paramètres de configuration, et/ou pour transmettre au moins un identifiant de configuration pour le jeu de paramètres de configuration au terminal mobile de communication (10).

13. Appareil de fonctionnement (20) selon la revendication 11 ou 12, l'appareil de fonctionnement (20) étant conçu pour déterminer sa position sur la base de signaux radio et/ou lumineux reçus.

14. Luminaire présentant un appareil de fonctionnement (20) selon l'une quelconque des revendications 11 à 13.

15. Système de configuration présentant
- au moins un appareil de fonctionnement (20) pour le fonctionnement d'un moyen d'éclairage (22) et/ou d'un luminaire et
- au moins un terminal mobile de communication (10) pour réguler ou commander le moyen d'éclairage, le terminal mobile de communication (10) présentant au moins un capteur optique (12, 13) conçu pour détecter des paramètres techniques de la lumière présentant une information de clarté, l'appareil de fonctionnement (20) et le terminal mobile de communication (10) présentant à chaque fois une interface sans fil (21, 11) conçue à chaque fois pour échanger des paramètres de configuration entre l'appareil de fonctionnement (20) et le terminal mobile de communication (10), les paramètres de configuration étant transmis à partir du et/ou vers l'appareil mobile de communication (10) et le terminal mobile de communication (10) étant en particulier conçu pour réguler, via l'interface (11), sur la base des paramètres techniques de la lumière détectés, la diffusion de lumière du moyen d'éclairage, la régulation étant effectuée par une modification des paramètres de configuration ;
le terminal mobile de communication (10) étant conçu pour détecter automatiquement l'appareil de fonctionnement (20) au moyen d'un identifiant et pour transmettre des paramètres de configuration prédéfinis à l'appareil de fonctionnement (20) ;
**caractérisé en ce que** le terminal mobile de communication (10) est conçu pour lire et enregistrer des données de position de l'appareil de fonctionnement (20) et/ou du luminaire et pour transmettre des paramètres de configuration prédéfinis automatiquement et/ou suite à une interaction d'utilisateur à l'appareil de fonctionnement (20) lorsque le terminal de communication mobile (10) se trouve à une distance déterminée de l'appareil de fonctionnement (20).

16. Système selon la revendication 15, le terminal mobile de communication (10) étant un terminal mobile de communication (10) selon l'une quelconque des revendications 1 à 11 et l'appareil de fonctionnement (20) pour le fonctionnement du moyen d'éclairage étant un appareil de fonctionnement (20) selon l'une quelconque des revendications 11 à 13.

17. Procédé pour la configuration d'un appareil de fonctionnement (20) pour le fonctionnement d'un moyen d'éclairage,
un terminal mobile de communication (10) détectant, au moyen d'au moins un capteur optique (12, 13), des paramètres techniques de la lumière présentant une information de clarté, le terminal mobile de communication (10) et l'appareil de fonctionnement (20) échangeant des paramètres de configuration via à chaque fois une interface sans fil (11, 21), le terminal mobile de communication (10) régulant en particulier la diffusion de lumière du moyen d'éclairage (22) via l'interface (11) sur la base des paramètres techniques de la lumière détectés ;
le terminal mobile de communication (10) détectant automatiquement l'appareil de fonctionnement (20) au moyen d'un identifiant et transmettant des paramètres de configuration prédéfinis à l'appareil de fonctionnement (20) ;
**caractérisé en ce que** le terminal mobile de communication (10) lit et enregistre des données de position de l'appareil de fonctionnement (20) et/ou du luminaire et transmet des paramètres de configuration prédéfinis automatiquement et/ou suite à une interaction d'utilisateur à l'appareil de fonctionnement (20) lorsque le terminal mobile de communication (10) se trouve à une distance déterminée de l'appareil de fonctionnement (20).
